# EUROPEAN PATENT APPLICATION

(11) **EP 0 546 855 A1**
(43) Date of publication of application: **16.06.1993**
(21) Application number: 92311340.1
(22) Date of filing: 11.12.1992
(51) Int. Cl.: G06F 13/38, G05B 19/04

(54) **Multi-mode input/output circuit and module, and process control system using same**

(30) Priority: 13.12.1991 US 809280
(71) Applicant: Moore Products Co., Philadelphia, PA 19477 (US)
(72) Inventor: Bilane, Glenn, Bradley,, Pennsylvania 19040, (US); Fenley, John, Douglas,, Amber, Pennsylvania 19002 (US); Goble, William, Mooney,, Perkasie, Pennsylvania 18944, (US)
(74) Representative: Newby, John Ross

(57) **Abstract**

A universal I/O circuit is provided to interface a control computer system with remote sensor transmitters which produce outputs representing one or more process variables and with remote controlled devices which control process variables. The circuit uses a pair of terminals (28a, 28c) in series combination with an electrically-controllable variable resistance device (74) and a load means (76) , across which series combination a supply voltage (from 56, 62) is applied. A microcomputer (52) controls the resistance of the variable resistance device (74), as well as of associated circuity, to operate them appropriately to receive current inputs from the remote transmitters or to supply current or voltage outputs to the remote controlled device; in any of these cases, the remote controlled device or remote transmitter is connected directly to the two terminals (28a, 28c) . The variable-resistance device is preferably a transistor, and the load means a resistor.

## Description

### FIELD OF THE INVENTION

This invention relates to input/output (I/O) circuits for receiving signals from process-variable sensors and processing them for delivery to a computer, and for receiving control signals from the computer for transmission to remote controlled devices.

### BACKGROUND OF THE INVENTION

Process control systems are known in which a plurality of sensors sense one or more process variables to produce signals which are transmitted to one or more controller computers; the one or more controller computers normally control one or more remote controlled devices which determine the value of the process variable in accordance with the sensed value of the variable, for example to hold it constant or to change it to some new desired value.

As examples, the sensed process variable may be a fluid flow rate, a temperature, a differential pressure, etc. and is sensed by a sensor transducer which converts the value of the process variable into an electrical signal which is supplied to a transmitter for transmission to the one or more controller computers. The controlled devices may be such things as valves for controlling fluid flow, heaters for controlling temperature, devices for starting or controlling the speeds of motors, etc.

It is common in such systems to provide I/O circuits which are supplied with analog signals from the sensing devices and which convert them to the desired digital form for use by the one or more controller computers; it is also known to provide I/O circuits which are supplied with digital signals from the one or more controller computers and convert them into analog signals for transmission to the controlled devices.

Typically, each I/O circuit is connected to a pair of terminals from which a two-wire line extends to a remote transmitter or controlled devices, and contains appropriate analog-to-digital and digital-to-analog circuits for producing the desired interfacing between the transmitters and controlled devices on one hand and the one or more controller computers on the other hand. Thus each such pair of terminals is normally associated with an I/O channel which receives analog signals from the sensors to produce digital signals for supply to the one or more controller computers, or which receives digital data signals from a central controller computer and supplies corresponding analog control signals to the controlled devices. The first of this class of signals, received from the sensors, may be described as input currents or input voltages, depending on the nature of the sensor and transmitter, and the second class of signals, which are supplied to the controlled devices, may be described as output currents or voltages.

The format of the signals from the transmitters may also be different in different situations; in the most common form of system, the signals may be simple analog current levels or voltages, but in some cases may comprise pulses the frequency or sequence of which conveys the sensed information.

In general, the types of I/O circuits required to provide these various functions in response to the several types of signals are mutually exclusive in form, and a specific form of I/O circuit must be used for each function. For example, a current-input I/O circuit is different from a current-output I/O circuit, and voltage-input and voltage-output I/O circuits also differ each from the others.

In this connection it is noted that "current input" and "current output" do not necessarily mean that the source of the current is on one side or the other of the I/O terminal. In general, both "2-wire" current input and "2-wire" current output modes utilize a voltage source in the I/O circuit to provide the operating current; a current input mode is one in which the current varies in accordance with the sensed process variable, while the current output mode is one in which the current sent out to a controlled device is determined by the I/O circuit. In so-called "4-wire" current input, the operating supply power is provided external to the I/O circuit.

Several significant practical difficulties arise when each of the I/O circuits is suited for only one particular mode of operation, for example either current input, current output, voltage input, voltage output or other. This is primarily because the I/O circuits or channels are typically bought and sold in groups or modules; that is, a unitary module will typically have eight or sixteen pairs of terminals, with the same type of I/O circuit associated with each pair of terminals. Accordingly, each I/O module comprises either a set of current input channels, or a set of current output channels, or a set of some other type of channel.

This presents a number of practical drawbacks. First, unless the number of I/O circuits of a given class needed by the user happens to be just the number which is provided by one or more modules, there will be at least some I/O circuits which are unused, representing wasted space and money. Further, each module typically handles only one type of signal to or from a number of different remote points, so that the different signals to and from any given plant area, for example, will be distributed among several different modules; this is often an inconvenience in servicing.

Large control systems are frequently assembled in the manufacturer's factory, to the specifications of the customer, then shipped to the customer's plant for installation. This installation involves connections to a power source and connections to field wiring. To protect delicate internal circuitry and wiring, only the terminals for connection to the field devices are accessible in the area in which the installation connections are made.

All the signals to and from a given area of the plant are frequently run in multi-conductor cables, trays, or conduits. To facilitate wiring connections to the cables, trays, or conduits, it is important that all the I/O circuit connections for a given cable or conduit be in close proximity. In the past, this has led to the regrouping of connections to and from I/O modules into new groups of terminals for installation connections, located in additional cabinets, added for the purpose. This practice is called "marshalling". An added benefit of adjacency of connections for given areas of the plant is easier maintenance, diagnosis, and repair.

U.S. Patent No. 4,593,380 of Mark J. Kocher et al, issued June 3, 1986 describes a system employing I/O circuits each of which is selectively operable in different modes, either as an input I/O circuit or as an output I/O circuit for exchanging signals between a central processing unit of a controller and a process being controlled. Such an I/O circuit, when installed in plural form in a module along with other similar circuits, enables the user to provide, in effect, any desired combination of input and/or output I/O circuits in that module by appropriate programmed control of the individual I/O circuits, as desired for purposes such as those mentioned above.

The I/O circuit of the '380 patent requires three I/O terminals, a first of which is a common in/out terminal used to connect to a lead extending to one side of a load device or of an input device, whichever is to be used. In operating a load device, the other side of the load is connected to a second of the I/O terminals, which is supplied from one pole of the operating power supply; when used to receive input signals, the other side of the input device is connected to the third I/O terminal, which is supplied from the other pole of the operating power supply.

The circuit disclosed in the above-identified '380 patent utilizes an IGT (Insulated Gate Transistor) connected between the common in/out terminal and one side of the supply source, and a preload resistor connected between the common in/out terminal and the opposite power supply terminal. The IGT is gated off when the circuit is operated as an input point, and is switched on and off when the circuit is used as an output point. The programmed controller is programmed to switch the mode in which each I/O circuit operates in accord with whether it is being used as an input or an output circuit. In this way the same physical I/O circuit can be used for all of the I/O circuits; one need only connect the external input device or load device to the appropriate terminals and switch the circuit to the appropriate mode by means of the programmed computer.

The present invention seeks to provide a new and useful I/O circuit and module for use in a process control system.

Another aim is to provide such circuit and system which does not require marshalling of leads.

Still another aim is to provide such a new and useful I/O circuit which can accommodate and handle analog current and voltage inputs or outputs, as well as pulse signals or other types of process control signals.

A further aim is to provide such a circuit, and a module employing same, which is inexpensive in the components which it uses, and which lends itself especially well to embodiment in an integrated circuit, at least in part.

Still another aim is to provide such a circuit which has provision for redundant operation of two identical circuits, by paralleling I/O terminals of two "redundant mates", one online, the other off-line, in a stand-by condition.

A further aim is to provide such a circuit which can easily be modified to provide extremely reliable limitation of voltages and currents applied to field wiring so as to avoid causing explosions by sparks between the field wiring, or by thermal heating of devices connected to the field wiring.

An additional aim is to provide such a circuit in which voltage signals representing the I/O current and the input voltage, as well as voltage signals used to regulate the output, are all referenced to the same power supply terminal.

It is also an aim to provide such a circuit and system in which each I/O channel is galvanically isolated from all others, has excellent stability and reliability, and is inexpensive and easy to service.

### SUMMARY OF THE INVENTION

These and other aims and features of the invention are achieved by the provision of a new and useful I/O circuit which is adapted to be electrically switched into any one of a plurality of different modes in which it provides corresponding different functions and operations, for example so that the same I/O circuit may be electrically controlled to handle analog input currents, analog output currents, analog input voltages, analog output voltages, pulse current or voltage inputs or pulse current or voltage outputs, as examples, as determined by electrical commands supplied thereto.

The present invention provides a new and useful form of multi-mode I/O circuit, differing from that of the '380 patent in significant ways and having certain advantages in various applications thereof. In the I/O circuit of the present invention, there are employed a pair of I/O terminals in series combination with a load means and with an electrically variable resistance device, across which series combination a DC supply voltage is supplied. When a two-wire analog current-input remote device is used, it is connected between the above-mentioned two terminals, the variable resistance device is automatically placed in its low resistance condition by a programmed computer, and output is taken across the load means serving as a current sensing element. When analog current output signals are to be provided, the output leads of the I/O circuit extending to the remote controlled device are connected to the pair of I/O terminals, and the variable resistance device is modulated in resistance so as to vary the output current in a predetermined manner, again upon electronic command from an associated microprocessor. The variable resistance device is preferably controlled by a feedback circuit which minimizes the error between the actual output current, as sensed by the voltage across the load means, and the desired current commanded by the programmed computer, via a digital-to-analog converter. This use of feedback provides greater stability and reduced sensitivity to changes in the value of the field load. Two-wire current pulse inputs are handled in the same general way as the above-described analog current inputs.

To provide output voltages to a high-impedance remote load from the I/O circuit, an additional low resistance is preferably connected between the two terminals, in parallel with the remote load. In the voltage output mode, the circuit functions just as in the current output mode. The output current through the additional low resistance produces a voltage proportional to the current. Provided that the value of the additional low resistance is much less than the remote load impedance, the ratio between output voltage and output current is determined by the value of the additional low resistance.

Designating the I/O terminal connected to the power supply as the power terminal and the I/O terminal connected to the variable resistance device as the common terminal, when receiving a voltage input from a remote device the variable resistance device is put into a low resistance condition and the voltage signal source is connected between the common terminal and a third voltage-input terminal, here designated as the V-IN terminal. The V-IN terminal is in this case utilized directly as the input to the I/O circuitry. Connection is made through the variable resistance device and load means, rather than a direct connection to the 0.0 volt point of the I/O circuit, to reduce the number of terminals, to permit disabling the circuit in the event of a malfunction in a redundant system, and to minimize potential damage due to miswiring the I/O terminals. The circuit which senses and converts the voltage input draws very little current from the voltage signal source; therefore, the series connection of the voltage signal source with the variable resistance device and the load means causes no significant change in the voltage sensed and converted. This preferred circuit arrangement provides a voltage signal, current sense signal, and variable resistance device control signal, all referenced to the same supply voltage terminal. This simplifies the design of the integrated circuit or other related circuitry used in the I/O circuit.

Voltage pulse inputs are handled in the same general way as analog voltage inputs.

The mode in which each I/O circuit operates is preferably controlled electrically from the one or more controller computers by way of a microprocessor in each module, and can be changed at any time, independently of the mode in which other I/O circuits of the same module are operated.

Preferably each I/O circuit is galvanically isolated from all others, that is, their DC supply voltage levels are completely independent of each other and from system ground. This channel-to-channel isolation permits the I/O channels to be operated completely independently of each other, and simplifies wiring considerations when connecting I/O circuits to various devices. It also permits interconnection of multiple I/O circuits in various ways, described below, to accommodate even more signal types.

Other devices may be used in the I/O circuits for auxiliary functions, or to provide safety features, and other modes of operation including operation with bipolar input and output signals are possible. Some of these modes involve a combination of multiple interconnected I/O circuits for one input or output signal.

There has therefore been provided a new and useful I/O circuit and module in which each I/O circuit is independently controllable electronically to change the mode in which it operates to accommodate a variety of different input and output conditions, with the various features and advantages described above.

### BRIEF DESCRIPTION OF FIGURES

These and other objects and features of the invention will be more readily understood from a consideration of the following detailed description, taken with the accompanying drawings, in which:
Figure 1 is a block diagram illustrating an over-all system in which the invention is useful;
Figure 2 is a block diagram showing a preferred embodiment of an I/O module according to the invention;
Figure 3 is a schematic diagram, largely in block form, showing a preferred embodiment of the integrated circuit (ASIC) used in the module of Fig. 2;
Figure 3A shows the status of the ASIC of Fig. 3 when used to respond to analog current inputs;
Figure 3B shows the status of the ASIC of Fig. 3 when used to produce analog current outputs;
Figure 3C shows the status of the ASIC of Fig. 3 when used to respond to analog voltage inputs;
Figure 3D shows the status of the ASIC of Fig. 3 when used to produce analog voltage outputs;
Figure 3E shows the status of the ASIC of Fig. 3 when used to respond to pulse current inputs;
Figure 3F shows the status of the ASIC of Fig.3 when used to respond to pulse voltage inputs;
Figure 3G shows the status of the ASIC of Fig. 3 when used to respond to four-wire analog current inputs;
Figure 3H shows the status of the ASIC of Fig. 3 when used to respond to four-wire pulse current inputs;
Figure 3I shows the status of the ASIC of Fig. 3 when used to provide discrete DC output signals;
Figure 3J shows the status of the ASIC of Fig. 3 when used to respond to discrete (on-off) DC switched input signals, for fast response;
Figure 4 is a block diagram illustrating how two I/O channels of the invention may be combined to accommodate a bipolar voltage input;
Figure 5 is a block diagram illustrating how two I/O channels of the invention may be combined to produce a bipolar output signal.
Figure 6 is a block diagram illustrating how two I/O channels of the invention may be used to accommodate a bipolar current input;
Figure 7 is a block diagram illustrating how two I/O channels of the invention may be combined to produce a bipolar output voltage.
Figure 8 is a schematic diagram, largely in block form, of another embodiment of the invention, preferred when a simpler system capable of fewer but important functions is desired; and
Figures 9-11 are electrical schematic diagrams illustrating certain ancillary features which preferably, but optionally, are included in the system of Fig. 3.

### DETAILED DESCRIPTION OF PREFERRED EMBODIMENTS

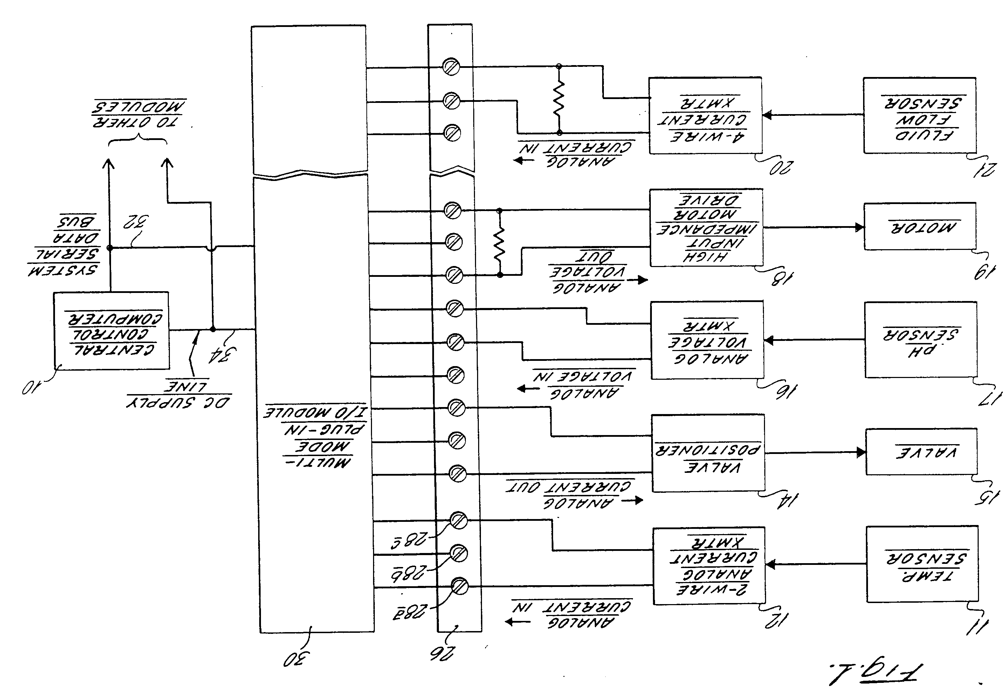

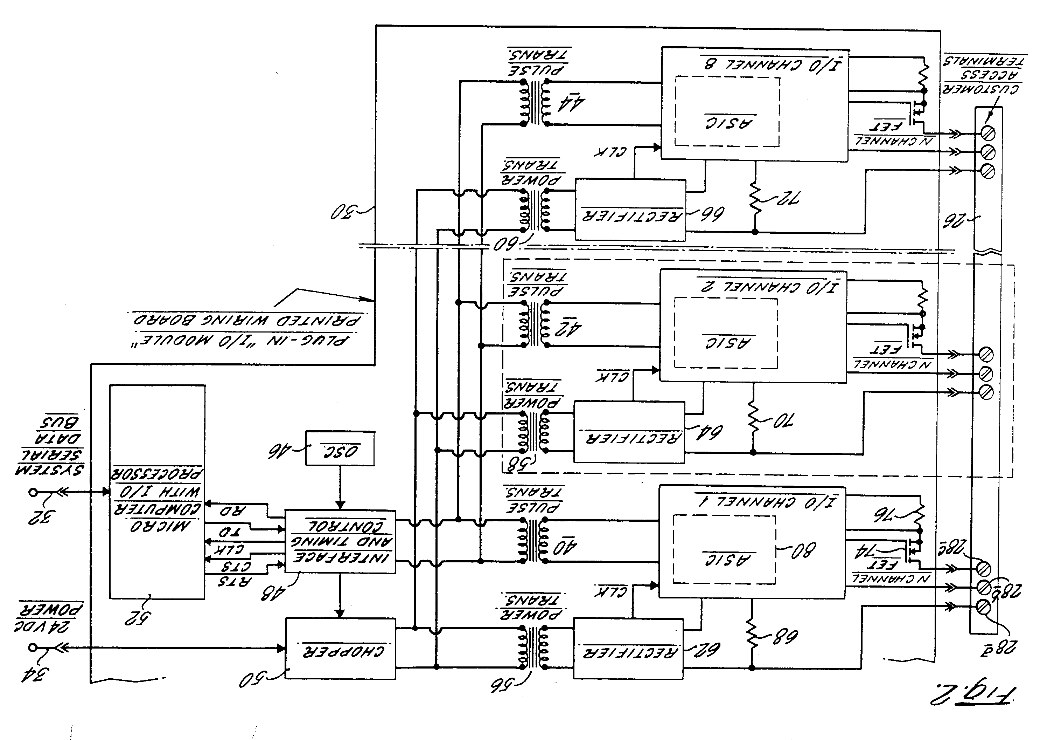

Referring now to the embodiments of the invention shown in the drawings by way of example only, and without thereby in any way limiting the scope of the invention, Figure 1 shows a central control computer 10 which is to receive information from, and transmit control signals to, various remote sensors and controlled devices of a plant sub-system. In this example the sub-system consists of a temperature sensor 11 and a two-wire analog current transmitter 12; a remotely-controlled device 14 such as a valve positioner for controlling a valve 15; an analog voltage transmitter 16 responsive to a pH sensor 17 for sensing the pH of a liquid; a high input impedance motor drive 18 controlled by an analog voltage supplied thereto to operate a motor 19; a four-wire current transmitter 20 responsive to a fluid flow sensor 21; and, typically, other sensors, transmitters, actuators and controlled devices (not shown) all associated with a common sub-system, in one plant area.

Also shown in Fig. 1 is a terminal strip 26 containing a plurality of pairs of terminals such as 28a, 28c. Preferably, in this example, each such pair of terminals is associated with a third terminal such as 28b, to form triads of such terminals. For convenience, only five such triads are shown; a more typical number in practice, for this embodiment is eight or sixteen. The remote devices, as shown, are connected either to the upper and lower terminals of each triad or to the center terminal and the lower terminal thereof.

In accordance with the invention a special multi-mode plug-in I/O module 30 is electrically positioned between the central control computer 10 and the terminal strip 26. It will be understood that in Figure 1 the various electrical connecting lines shown may in fact each comprise many conductors, line 32 for example constituting a system serial data bus interconnecting the I/O module 30 and the central computer 10, and line 34 representing a pair of leads supplying an operating supply voltage of 24 volts DC, in this example, from the central computer to the I/O module.

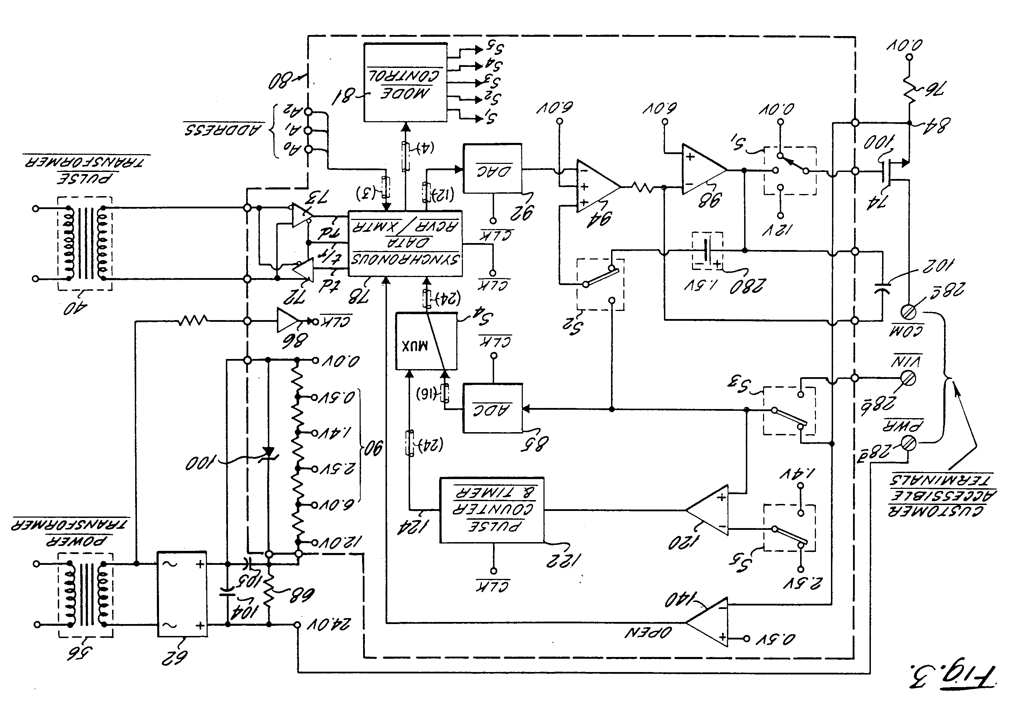

Turning now to Figure 2 depicting a single I/O module in detail, for simplicity there are shown only three of the eight triads of terminals on terminal strip 26 of Fig. 1; the line 32 again represents the serial data bus to and from the central station computer 10, and the line 34 applies 24 volt DC power to the I/O module 30. Also shown is a module oscillator 46, an interface and timing control unit 48 and a chopper 50 all for use in common by all the channels of the module. A module microcomputer 52 containing a programmed I/O processor is provided which controls operations in the I/O module and communicates with the central station over bus 32. Oscillator 46 provides the basic clock for the module. Pulse transformers such as 40,42 and 44 supply signals between their respective I/O channels and the interface and timing control 48. The details of how these elements cooperate in the module will be described more fully below; suffice it here to note that the chopper 50 chops the 24-volt DC power so that it can pass through the isolating power transformers such as 56, 58 and 60 in Fig. 2 to the respective I/O channels. The power transformers deliver the chopped supply voltage to corresponding rectifiers such as 62, 64 and 66 respectively, for each channel, which rectifiers in turn supply their output DC through respective dropping resistors 68, 70 and 72 to the circuits identified as I/O channel 1, I/O channel 2 and I/O channel 8 in Fig. 2. Alternatively, a tap on the power transformer can supply 12 volts DC directly to the I/O channels.

It will be understood that the circuitry in the I/O channels 1 through 8 may be identical, and in this embodiment are identical, with each other, hence only one channel (channel 1) need be described in detail.

As shown in Figure 2, the positive voltage from rectifier 62 is supplied to terminal 28a of the terminal strip 26, and the lower terminal 28c of the triad is connected through a variable resistance device 74 and a load means 76 to local ground, i.e. to the other, more negative side of the output of the rectifier 62. The variable resistance device 74 is in this example an N-channel field effect transistor (FET), and the load device 76 is a low-valued fixed resistor. Accordingly, it will be seen that the top and bottom I/O terminals 28a and 28c are connected in series with the variable resistance device 74 and with the load resistor 76, across which series combination the isolated DC power supply voltage is applied. As discussed previously, a two-wire process-control transmitter or actuator may be connected between terminals 28a and 28c, or a process-control voltage transmitter may be connected between terminals 28b and terminal 28c. For convenience and conciseness in nomenclature, terminal 28a may be termed the "power" terminal (to which the DC supply voltage is applied), terminal 28c the "common" terminal since it is used for all input and output signals, and terminal 28b the V-IN terminal. Under the control of an application specific integrated circuit (ASIC) 80 in each channel, the FET 74 is operated in its highly conductive, low-resistance state or in a varying resistance state, to produce the operations mentioned above and described in detail hereinafter. In a preferred embodiment, the FET may be a Motorola type MTD3055EL.

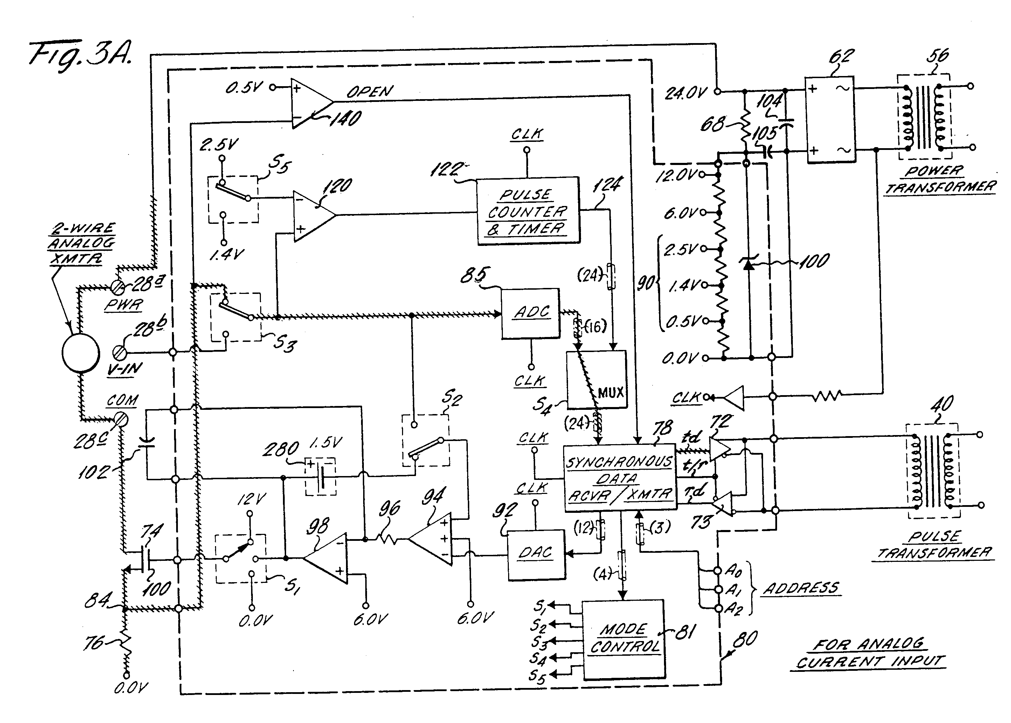

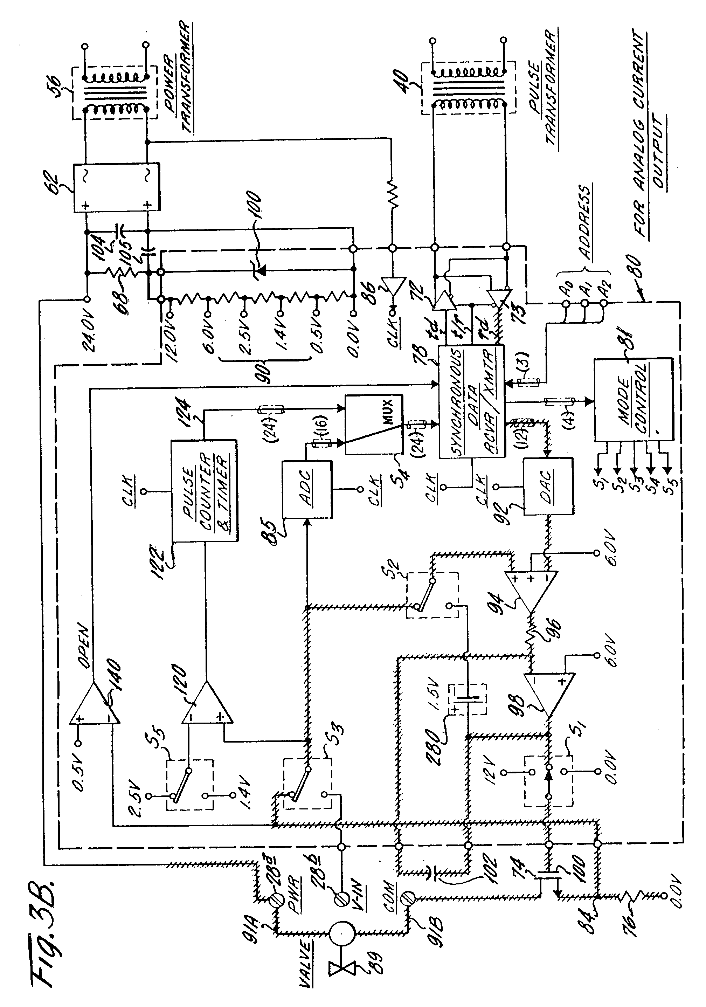

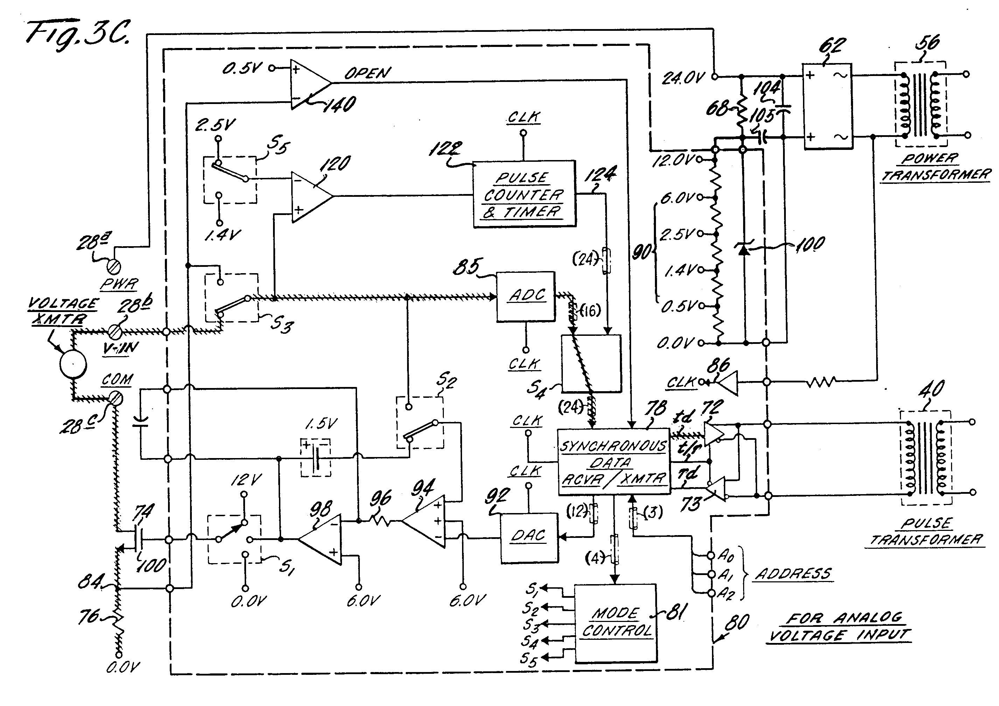

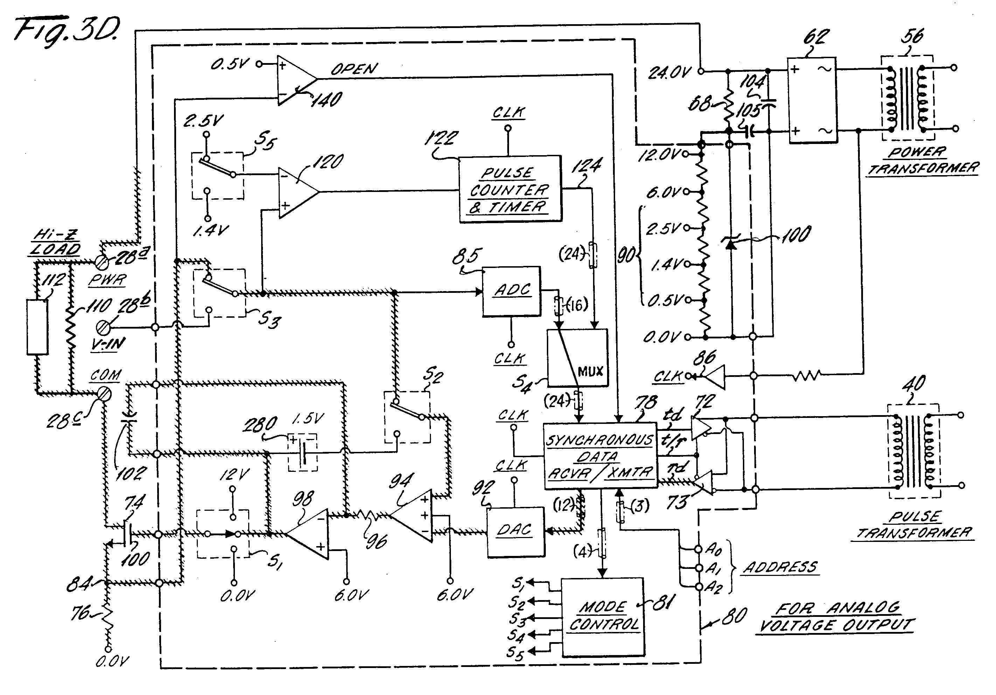

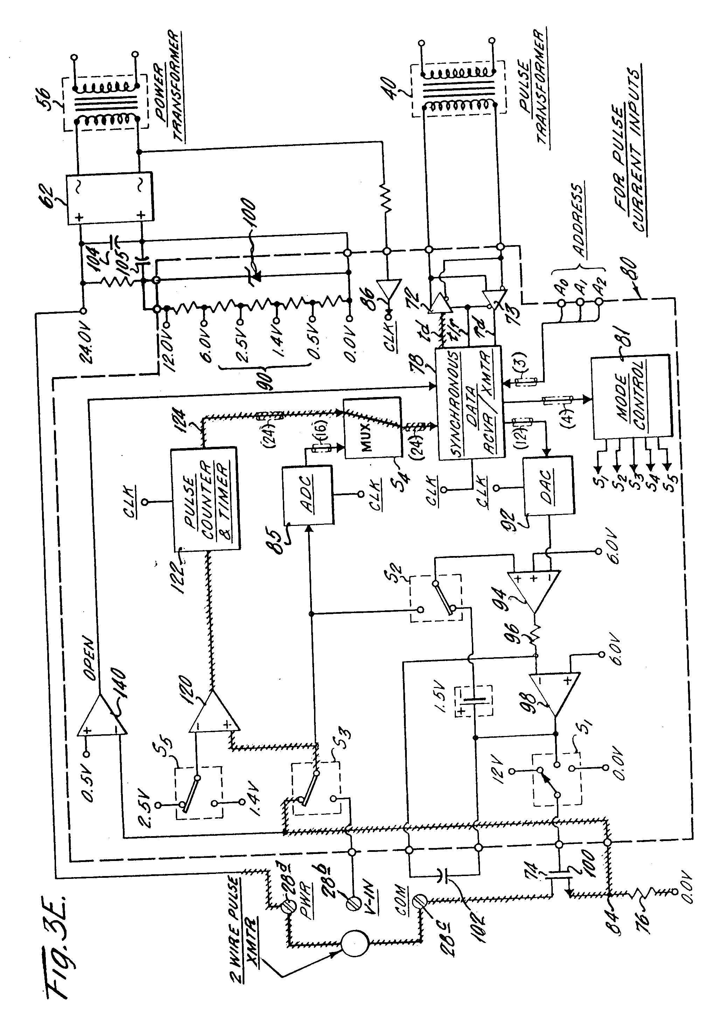

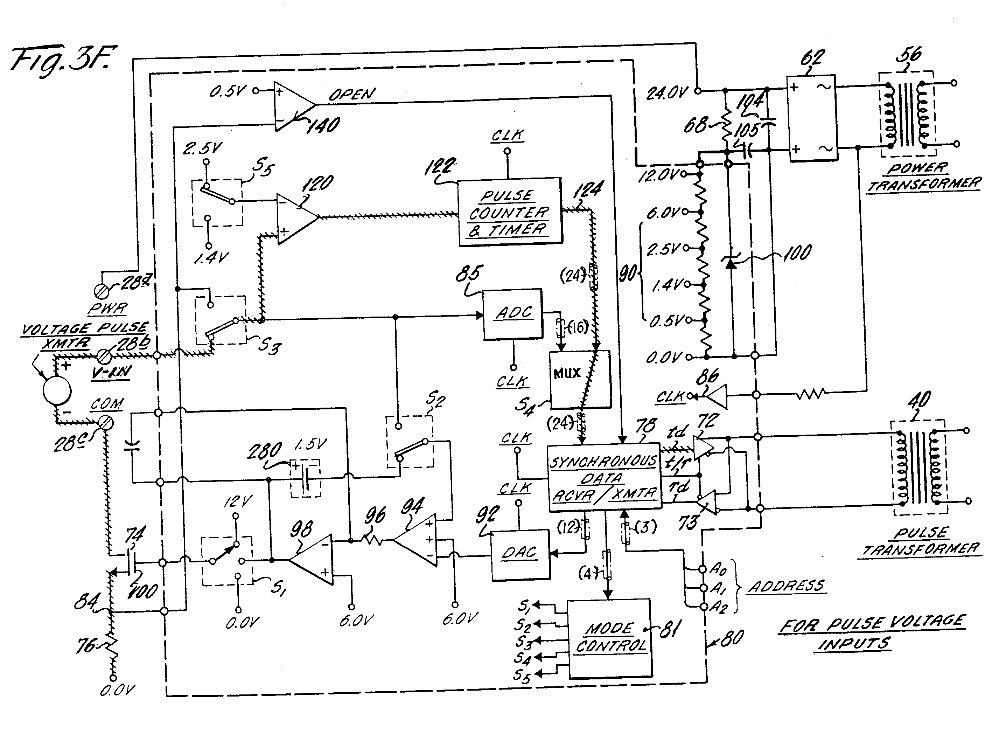

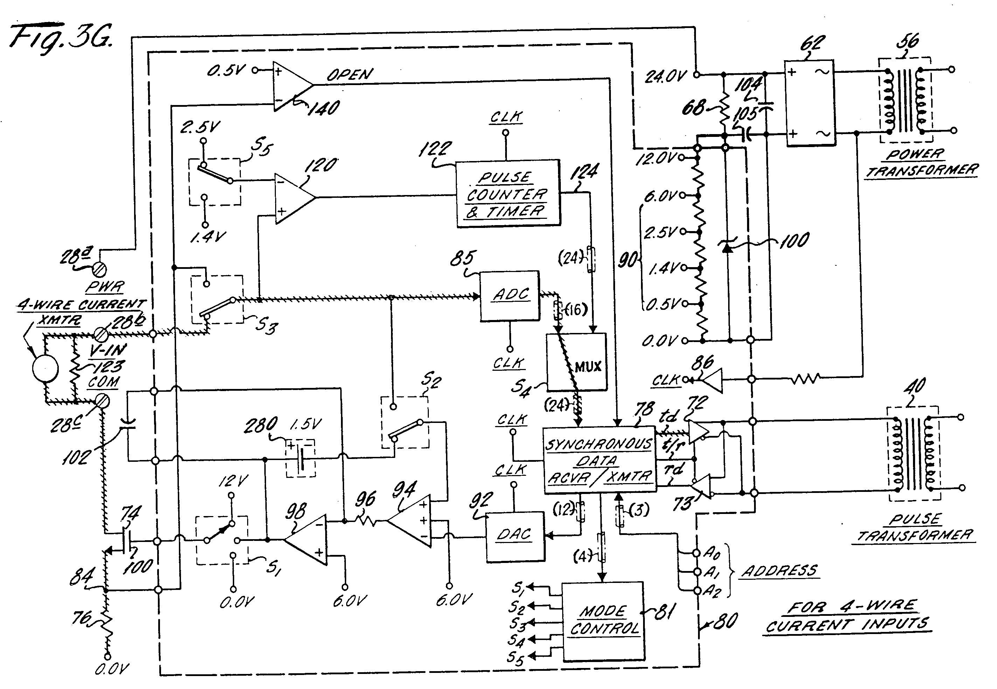

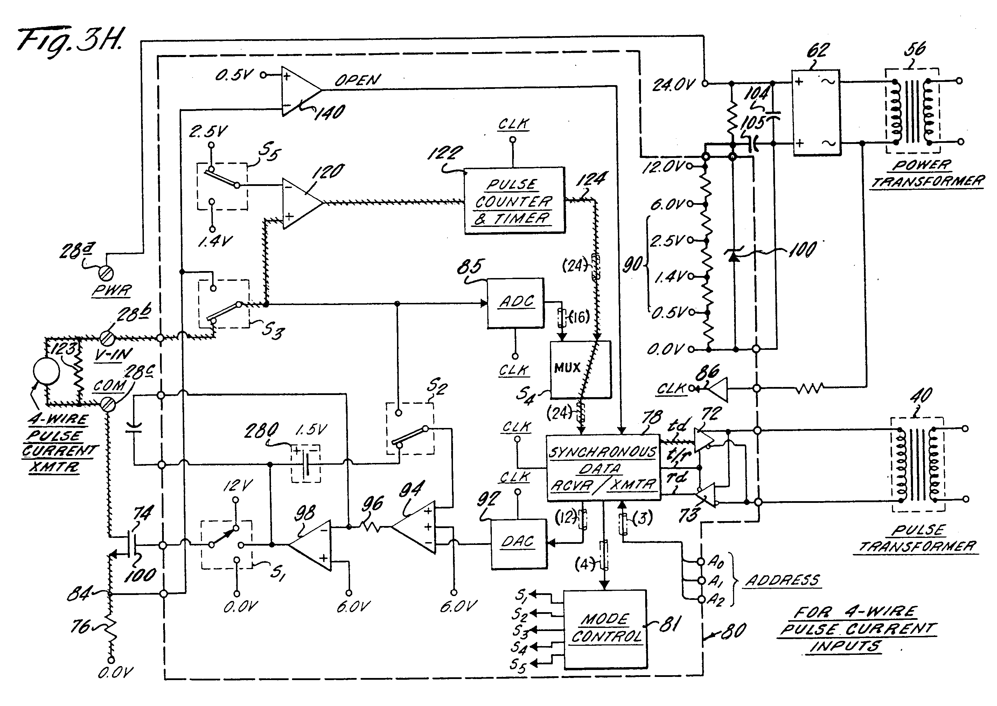

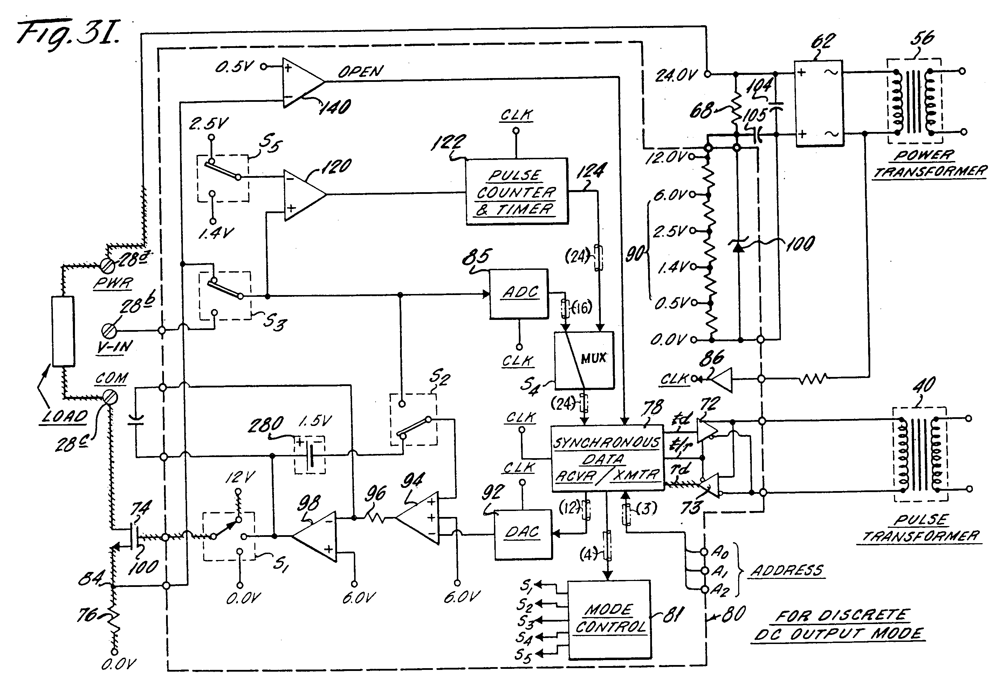

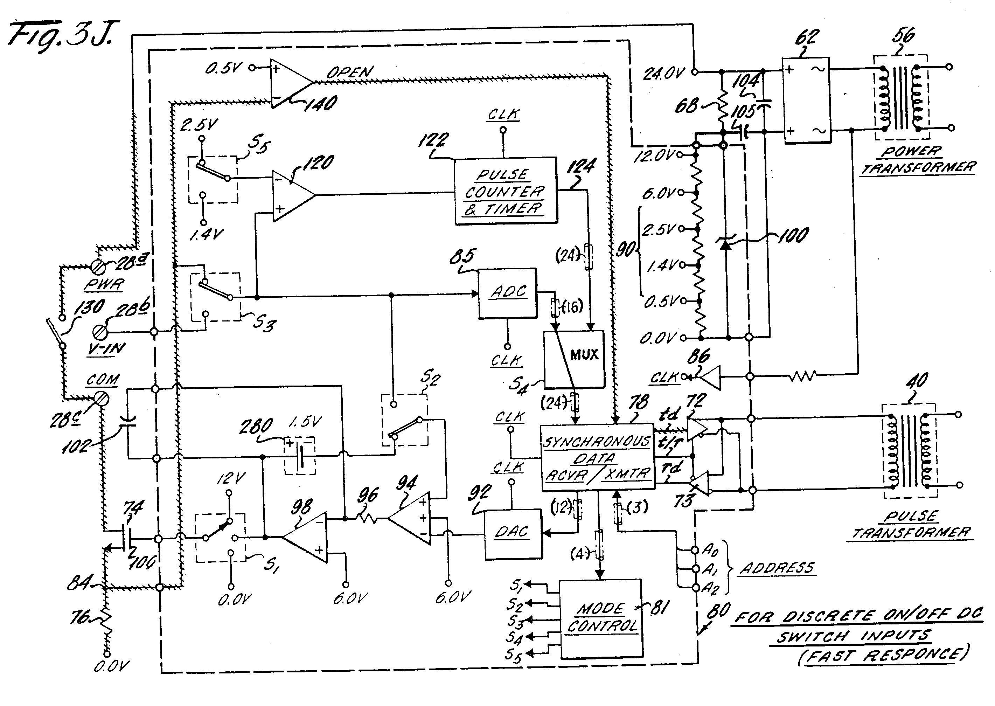

Referring to the more detailed diagram of Figure 3, channel 1 of the module of Fig. 2 is shown in detail, corresponding parts being indicated by corresponding numerals and the ASIC 80 being shown within the broken-line outline.

Here again are shown the power transformer 56, the rectifier 62, the clock pick-off 86, the dropping resistor 68 which drops the 24 volts to 12 volts for use in the ASIC circuitry, the application of the 24 volts to the power terminal 28a of the I/O channel, and the connection of the common terminal 28c through the MOSFET device 74 and the low-valued resistor 76 (250 ohms typical) to local ground (0.0 v.).

The ASIC is designed to operate from a supply voltage of approximately 12 volts; as mentioned above, this voltage may be generated from an external supply, such as a center-tap on the 24 volt power transformer secondary, or as shown it may be derived from the 24 volt DC supply by means of the dropping resistor 68 and shunt voltage regulator 100. In either case, the 12 volts is applied to a voltage divider 90, with taps at 0.5 volts, 1.4 volts, 2.5 volts, 6.0 volts, and 12.0 volts. The 12.0 Volt and 0.0 Volt taps supply power to the various amplifying and switching circuits within the ASIC. The 0.5 Volt tap is used to set a switching threshold for a comparator 140. The 1.4 volts and 2.5 volts, via switch S5, set a switching threshold for comparator 120. The 6.0 volts is a convenient bias voltage for proper operation of amplifier 98. If the internal shunt regulator is not used, the supply voltage of 12 volts is applied only to the voltage divider terminal, and no connection is made to the shunt regulator.

A filter capacitor 104 is connected across the 24 Volt supply, and another external filter capacitor 105 is connected across the voltage divider within the ASIC. These capacitors minimize the effects of rapid supply voltage fluctuations upon the functioning of the I/O circuit.

The digital address of the channel is determined by the jumpering of three address inputs designated A0, A1 and A2; each may be jumpered to a DC supply point at 0 volts or to a DC supply point at 12 volts, thus providing combinations of jumper settings corresponding to binary numbers from 0 to 7. These numbers are utilized to identify channels one to eight in the module (assuming an 8-channel module) for addressing by the module microcomputer 52. Other than the setting of the address jumpers, the same circuitry is used in all of the ASIC's for all of the channels. The operating mode of each channel is controlled by the states of five solid state switches S1 through S5, which are controlled by the message sent to that channel by the module computer 52.

More particularly, the data from the module computer 52 which passes through pulse transformer 40 is then passed through a circuit comprising a differential line driver 72 and a differential line receiver 73. Signals from the differential line receiver are supplied to synchronous data receiver/transmitter 78, to which the local address of the channel is also supplied from the jumper address inputs A0, A1 and A2. In this connection it is noted that while most of the lines in Fig. 3 are again shown in single-line form, each may comprise many individual lines, as shown by a cylindrical section about the line and a numeral adjacent the line, in parenthesis, indicating the actual number of wires in that line.

The specific ASIC shown in Fig. 3 is designed to operate with currents at the I/O terminals 28a, 28c of 0-20 mA or 4-20 mA, and typically with input voltages at V-IN of 0-5 volts. Output voltage ranges can be controlled by the value of external resistance. Typically, this range is 0-5 volts, but it can be as large as 0-19 volts. The basic elements of this ASIC are as follows.

The lines between the synchronous data receiver/transmitter 78 and the differential line driver 72 and differential line receiver 73 are labelled "td" for "transmit data", "rd" for "receive data" and "t/r" for transmit/receive selection. Data are transmitted to the computer 52 on td, and received from the computer on rd, while the line t/r controls whether the line driver or the line receiver is operative at any time. Switch S4 is labeled as a "MUX" (multiplexer), and is in effect a 24-pole double-throw solid-state switch.

The junction of resistor 76 with MOSFET 74 is connectable through switch S3 to the analog-to-digital converter 85 (ADC), the output of which is applicable to switching MUX S4 to the synchronous data receiver/transmitter 78, and thence by way of the td line through differential line driver 72 and pulse transformer 40 to the module computer 52. In this way the analog current through resistor 76 is measured and converted to an analog voltage, which is in turn converted to a combination of digital binary signals, sometimes called a code, and supplied as serial binary pulses to the module computer 52 as desired. This path is shown by the hatched lines in Figure 3A; note that in this mode of handling analog current inputs, input switch S1 is connected to the 12 volt DC supply to maintain the MOSFET in its highly conductive condition, so it presents only a few tenths of an ohm of resistance. Although the signal also follows other paths, such as to "open" comparator 140 and to "pulse" comparator 120, the signals at the ends of these paths are not ultimately used in the mode shown.

The switch conditions for the analog current output mode are shown in Figure 3B for supplying an analog control current to a remote controlled device, wherein the differential line receiver 73 supplies digital data representing the current to be transmitted, which is passed through the digital-to-analog (DAC) converter 92 for conversion to an analog signal; the latter analog signal, as shown in Figure 3B, is compared in unity gain amplifier 94 with the actual current which is sensed by resistor 76 and fed back via switches S3 and S2. The resultant error is amplified by op amp 98 or, if capacitor 102 is used, integrated by the combination of op amp 98 and capacitor 102. The 6.0 volts supplied to 98 and 94 provides a convenient bias voltage for proper operation of amplifier 98. The output of amplifier 98 controls MOS FET 74 through switch S1, so that the error between the desired current from DAC 92 and the actual current from 76 is brought essentially to zero.

Capacitor 102 is used to make amplifier 98 behave like an integrator when it is necessary to filter out of the output current noise which is present in the DAC output. Use of the integrator can also improve stability of the output circuit. In this example capacitor 102 is connected to terminals available at the exterior of the ASIC due to the difficulty in fabricating within the ASIC a capacitor of the value required. The capacitor value can be changed to vary the response speed of the output circuit.

In the case of an analog voltage input supplied between the V-IN and common terminals of the I/O circuit from a remote voltage transmitter as shown in Figure 3C, the power terminal 28a is no longer connected to the external two-wire line. The V-IN terminal 28B is connected through switch S3 to the ADC 85, the output of which is again supplied through the MUX switch S4 to the synchronous data receiver/transmitter 78; the digital data representing the voltage is thereby supplied to the output line td for passage through the differential line driver 72 to the module computer 52. Because the input to ADC 85 is a high impedance, almost no current flows through the input circuit. Therefore, the "COM" connection through FET 74 and resistor 76 causes almost no voltage drop, and thus, has no detrimental effect on the converted signal.

These three modes of operation, namely current input, current output and voltage input are the more commonly used of the various modes of which the circuit is capable, the current-input and current-output modes being by far the most common. Thus, if desired, the V-IN terminal can be eliminated and only the power and common terminals utilized while still providing all of the modes of operation which do not require use of the V-IN terminal.

Figure 3D shows the arrangement of the switches S1-S5, and the addition of a low-valued resistor 110 between the power and common terminals, as used in the analog voltage output mode to supply a controlled analog voltage to a remote high-impedance load indicated as 112. As in the case of the analog current output mode, the command signal from the module computer arrives over line rd, and the circuit switches are set as for the current output mode. The principal difference is that the low-valued shunt resistor 110 between the power and common terminals produces a voltage drop, dependent upon the output current. This voltage drop is supplied to the remote high-impedance load. Because the shunt resistance of resistor 110 is much lower in value than the remote high-impedance load, the desired varying voltage will be supplied to the remote load device despite variations in its impedance. Also, if resistor 110 were not used, then the output current required for reasonable output voltages would be too small for adequate resolution of the signal.

The pulse current input mode is shown in Figure 3E, which is the same as the analog current input mode of Figure 3A except that multiplexer S4 now sends to the synchronous data receiver/ transmitter the data passing over a path extending through S3, comparator 120, pulse counter and timer 122 and line 124, in place of the data from the ADC 85. In this case, each excursion of input current above 10 mA, corresponding to the 2.5 volt threshold selected by S5, is counted and timed as a pulse. This permits the computer to count pulses and determine the pulse frequency and period.

Similarly, the pulse voltage input mode shown in Figure 3F is like that for the analog voltage input as shown in Figure 3C, except that multiplexer S4 now sends to the computer the data from the path extending through V-IN, S3, comparator 120, pulse counter and timer 122 and line 124, in place of the data from the ADC. In this case, each excursion of input voltage above the threshold selected by S5, either 1.4 volts or 2.5 volts, is treated as a pulse. The threshold is selected by the programmed computer to correspond with the circuitry generating the pulses. Both thresholds are useful. The computer uses the data from the pulse counter and timer to count pulses and determine the pulse frequency and period.

The mode suitable for a four-wire analog current input is shown in Figure 3G, and is the same as that for the analog voltage input of Figure 3C, except that a low-valued resistor 123, for example of 250 ohms, is connected between the V-IN and common terminals as shown. Resistor 123 converts the externally-powered current signal into a voltage.

Figure 3H shows the mode utilized for four-wire pulse current input, which is like the pulse voltage input mode of Figure 3F, except for the addition of the low-valued resistor 123 between the V-IN and common terminals.

Figure 3I shows a discrete, or on/off, DC output mode, the switch S1 being shown in the "on" position. This mode can be used, for example, to energize and deengergize a remote DC relay. In this mode of operation, the received digital data on line rd is supplied through the synchronous data receiver/transmitter 78 to the mode control 81, signaling it to switch S1 from its uppermost and downwardmost positions, i.e. between the position in which the switch arm is supplied with 12 volts to the position in which it is supplied with 0 volts; when connected to 12 volts, the MOSFET is "on" with maximum current (lowest resistance), and when connected to 0 volts, it is off. This permits the MOSFET to be turned completely on and off in accordance with commands from the module computer to provide the desired output signals to the remote controlled devices.

There are a variety of other discrete, on/off, DC I/O modes which can be provided by the circuits shown. For example, Figure 3J shows the mode for a discrete on/off DC switch input designed for fast response, the leads from the remote on/off switch 130 being connected between the power and common terminals and switch S1 being placed in its "full-on" condition in which its arm is connected to the 12 volt supply. Voltage from resistor 76 is applied to comparator 140 and thence to synchronous data receiver/transmitter 78, to produce on/off signals on the td line which are transmitted to the module computer. As implemented in the preferred embodiment, the signal from comparator 140 is always sent in all reply messages from the I/O channel to the microcomputer, although the microcomputer does not always use this information. In the mode shown in Figure 3J, the data from the ADC are also sent to the computer. However, the signal from comparator 140 will sometimes be preferred to the data from the ADC because the comparator 140 can respond faster than the ADC to changes in switch state.

Some remote control devices and transmitters respond to and/or generate serial digital data in the form of sequences of pulses. Such sequences of pulses can be generated in the I/O circuit, under control of the microprocessor, by changing the position of S1 between the uppermost and downwardmost positions, when the ASIC is configured as shown in Figure 3I. These sequences can also be generated by changing the values sent to the DAC, when the ASIC is configured as shown in Figure 3B; in such case, capacitor 102 is preferably omitted. Such sequences of pulses can be received and decoded by the microprocessor, using the pattern of the ON/OFF signal from the "open" comparator 140 when the ASIC is configured as shown in Figure 3J.

Process control equipment typically uses unipolar signals, that is, signals which are always of the same polarity or zero. These signals usually represent a process variable which can change from 0 percent to 100 percent of some full-scale value. The signal is usually scaled so that the desired normal operating condition is near 50 percent of the full-scale value. However some control systems, particularly position or motion control systems, use bipolar signals, that is, signals which may vary between positive and negative polarities. Typically these signals are scaled so that the desired normal operating condition is near the zero value signal. To adapt a process control system which uses the 0 to 100 percent representation of signals to handle bipolar inputs and outputs, it is necessary to make the 50 percent representation correspond with the zero value input or output signal. This requires a shift in the zero value of inputs and outputs.

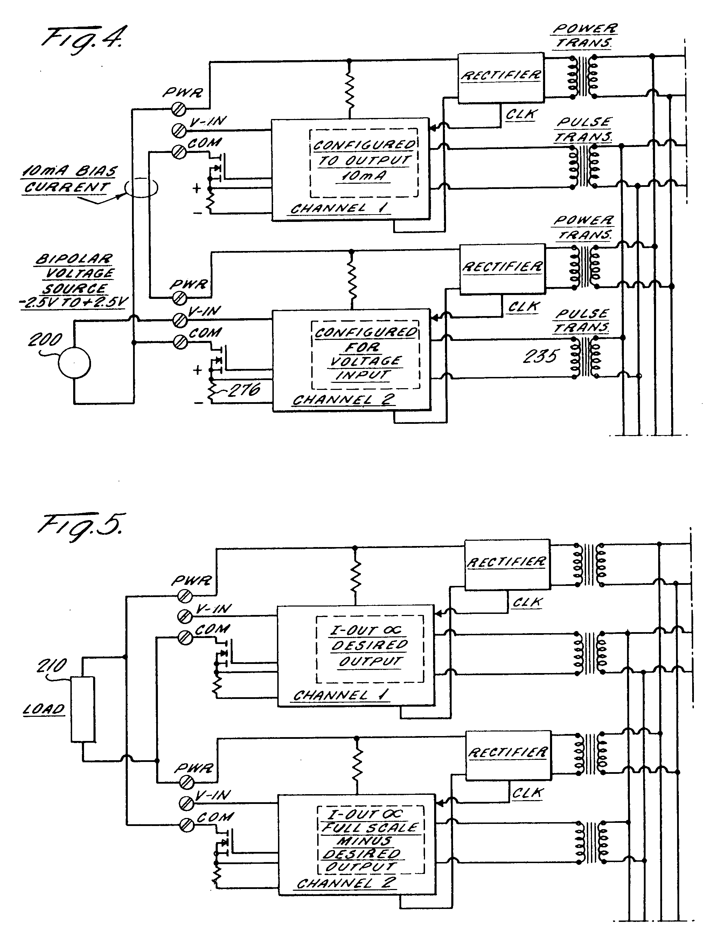

Figures 4-7 show arrangements by which a bipolar voltage input, varying for example from -2.5 volts to +2.5 volts, or a bipolar current, varying for example from -20 mA to +20 mA, can be handled. In each case two channels of I/O are utilized. Interconnecting channels to accommodate bipolar I/O is possible because of the galvanic isolation between channels.

In Fig. 4, channel 1 provides a constant 10 mA output current, which causes a voltage drop of 2.5 volts across the 250 ohm sense resistor 276 in channel 2. The connection of pwr-to-com and com-to-pwr effectively produces a 48 volt supply in series with the output of channel 1. The excess voltage appears across channel 1's output transistor, which is rated to handle such voltage. Channel 1's output transistor is regulated by the channel 1 circuitry, to maintain an output current of 10 mA, regardless of the output terminal voltage. Channel 2's output transistor, on the other hand, is turned on hard, and thus has a very low resistance. The 2.5 volt drop across resistor 276 adds to the signal voltage from the bipolar voltage source 200 (which may be a tachometer) being applied to the V-IN terminal of channel 2, so that an external voltage signal of -2.5 volts appears to be 0.0 volts with respect to channel 2's isolated 0.0 volt reference. Therefore, an external voltage of -2.5 volts is converted by channel 2 into a code which normally represents a voltage of 0 volts; an external voltage of 0 volts is converted by channel 2 into the code which normally represents 2.5 volts; and an external voltage of +2.5 volts is converted by channel 2 into the code which normally represents 5.0 volts. Thus, the current from channel 1 provides a bias which shifts the range of input voltages converted by channel 2. The output signals to the computer are supplied from channel 2 through pulse transformer 235.

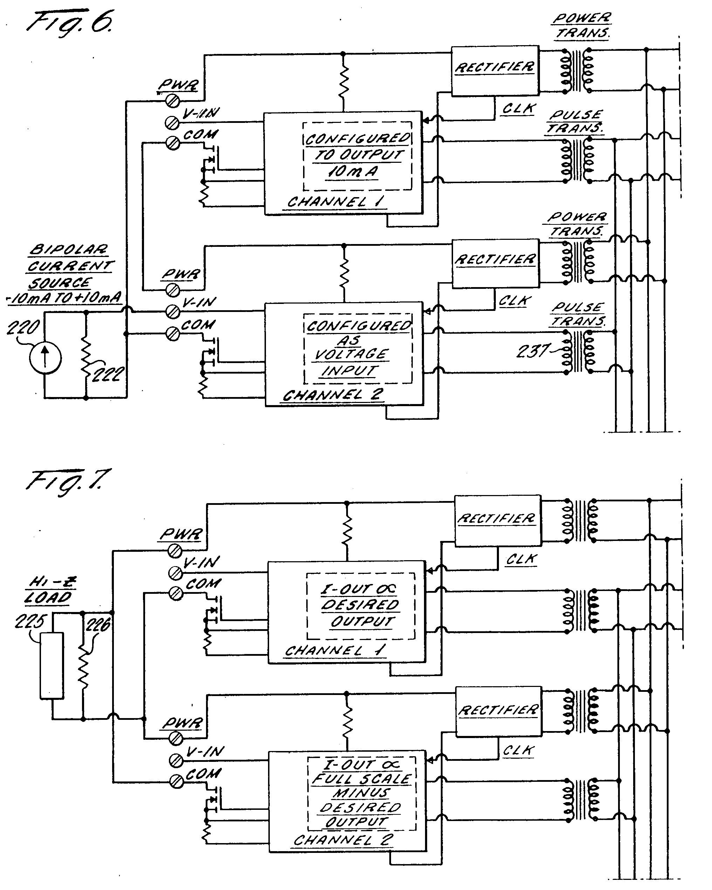

In Fig. 5, both channels are configured to produce output current. However, channel 1 outputs current which is proportional to the desired signal, and channel 2 output current which is proportional to the full-scale output current (20 mA) less the desired signal. Thus, when the desired signal is at exactly mid-range, channel 1 outputs a current of 10 mA through the load 210 from top to bottom, and channel 2 outputs a current of 10 mA through the load from bottom to top. The net sum of current is zero. This is equivalent to a balanced, class-A, push-pull output circuit. If the desired output signal is decreased to a value below mid-scale, channel 1 outputs less than 10 mA of current through the load from top to bottom, and channel 2 outputs more than 10 mA through the load from bottom to top. Thus, there is a net, non-zero current through the load from bottom to top. For the maximum desired signal, channel 1 outputs 20 mA, and channel 2 outputs 0.0 mA. Thus, the net current is 20 mA through the load from top to bottom. For the minimum desired signal, channel 1 outputs 0.0 mA, and channel 2 outputs 20 mA. Thus the net current is 20 mA through the load from bottom to top.

In Fig. 6, an externally powered bipolar current source 220 produces a bipolar voltage across the external resistor 222 connected between the V-IN and Com terminals of channel 2. The pair of interconnected channels then measures the voltage as described for Figure 4. The external resistor's value is selected so that full range of current from the bipolar current source is converted to a voltage between -2.5 volts and +2.5 volts. Output to the computer is then provided from channel 2 by way of pulse transformer 237.

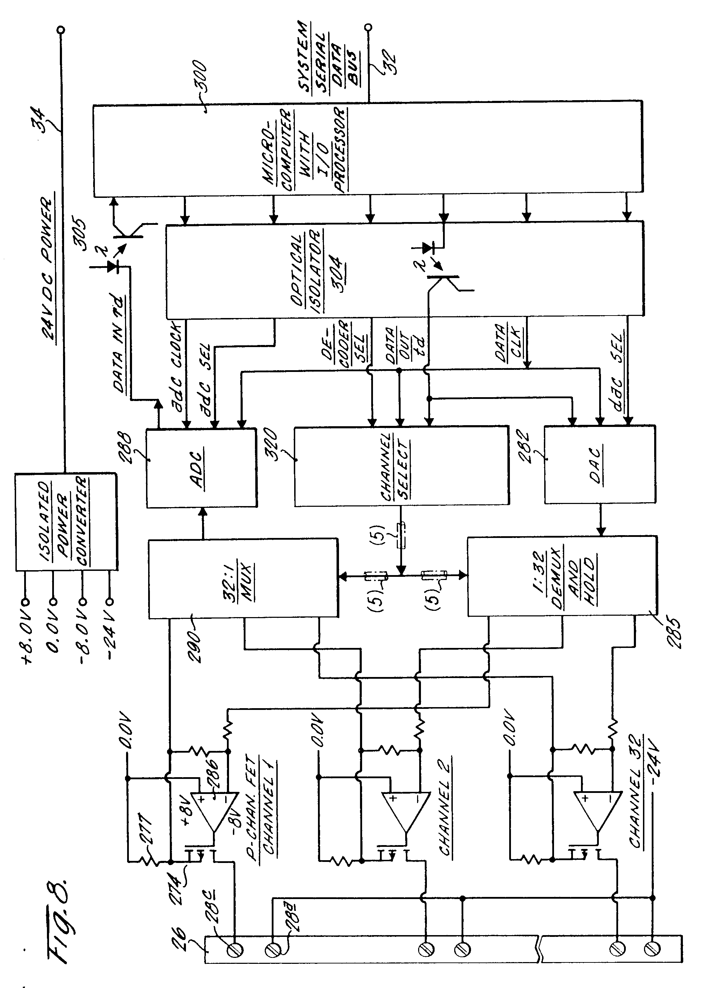

In Fig. 7, the two interconnected channels produce a bipolar current output in load 225 just as in Figure 5. Essentially all of this current flows through the external resistor 226, and is thus converted to a bipolar voltage. The resistor must be selected to convert a current between -20 mA and +20 mA into the desired bipolar voltage range. The impedance of the "Hi-Z Load" must be significantly larger than the external resistor's value, to retain accuracy.

The various circuit configurations of Figs. 4-7 are readily provided by merely jumpering together certain of the two triads of terminals, and in some cases adding an external resistor as shown.

Further with respect to preferred details of the I/O module described above, the heart of the device is the microcomputer 52, which may be a type Motorola MC68302. Besides a CPU memory and various computer I/O ports, this device in this example contains an I/O communications processor which is used to communicate with the rest of the control system over the system serial data bus line 32 of Fig. 1, and to communicate with the I/O channels through the interface and timing control 48. Each I/O channel receives its power and timing information from the chopped 24 volts via the power transformers. With such transformer coupling of supply power, and clock and data signals, each I/O channel is galvanically isolated from every other channel.

To communicate with the I/O channels, the program in the 68302 directs the computer to send a message to a selected one of the channels, which message contains the correct address for the desired channel. Whenever an I/O channel receives a message addressed to it by the 68302, that I/O channel replies with a message back to the 68302; as shown in Fig. 3, the five lines shown between the 68302 and the interface and timing control 48 are used to control the precise time a message is sent, to time each bit of the message, and to convey the transmitted and received data. In this connection, RTS means request to send, CTS means clear to send, CLK means clock, TD means transmit data, and RD means receive data. Messages are sent to each channel, and replies are received from each channel, 180 times per second. Thus within 1 second, 1440 messages leave the 68302 and 1440 reply messages enter the 68302.

With regard to the preferred message format, each message from the 68302 starts with a special pattern called a "preamble". This is followed by the address of the channel to be contacted, the desired mode of operation for the specified channel, data for the D-to-A converter, and a "postamble" which includes a CRC (cyclic redundancy check) error check and a special end of message pattern. Each reply message follows a similar format: preamble, channel address, status (which can include various diagnostic signals as well as the output of "open" comparator 140), either the A-to-D value or the pulse count and timing values, and a postamble which includes a CRC error check and a special end of message pattern.

For easy replacement, the I/O module plugs into a card cage that contains the terminals for the field wiring. Connectors in the I/O module connect to the power source and system serial data bus, in addition to the field terminals. The field wiring terminals are the only connections with the I/O channel accessible to the customer.

The "open" signal from the comparator 140 near the top of the ASIC unit is always sent in reply messages, as part of the status indicating whether the I/O circuitry is functioning or not. With 2-wire 4-20 mA signals, the "open" signal provides a diagnostic signal when the current falls below 2 mA. This is most likely caused by an open connection in field wiring. This signal can also be used to monitor the state of a discrete input. The status portion of the message can also be used for various signals which permit the microcomputer to verify that the circuit is working properly. For almost all the configurations of the I/O circuit, portions of the circuitry which are not essential for the given configuration can be used to verify proper circuit operation. For example, during the current output mode, the actual output current can be monitored by the ADC, and verified by the 68302 after each reply message.

The N-channel enhancement mode output transistor, (an inexpensive form of power metal-oxide semiconductor field effect transistor) is arranged in a common-source configuration with respect to the output, thus producing a high-impedance current output which is ideal for 0-20 mA outputs. The gate signal used to modulate the output transistor 74 is also a relatively low voltage (e.g. 0 to approximately 8 volts DC), referenced to the negative supply output, the same reference as used for "current sense" and "voltage sense" signals. The output transistor "looks like" a common-drain circuit (a source follower which has close to unity gain at lower frequencies) to the current regulating feedback loop. This facilitates predictable stabilization of the current regulating feedback loop and minimizes the effect of the field load upon operation of the circuit. The use of a MOSFET insures that the control signal to the output transistor will not affect the DC accuracy of the sensed output current as would be the case with a conventional bipolar junction transistor used in the same configuration.

When measuring voltage inputs in the embodiment described above, a separate V-IN terminal is used so that the voltage input circuit does not affect the accuracy of the current sensing circuit, and to insure that, in case of malfunction or improper configuration, power cannot be supplied into a low impedance voltage transmitter output by the current output circuit. The return connection for voltage inputs is made through the common terminal. This does not introduce significant error because the V-IN circuit is of very high impedance (typically over one megohm) and draws almost no current through the MOSFET and 250 ohm current sensing resistor 76. The 250 ohm resistance in combination with the isolation impedance, mostly capacitance, will limit the maximum common mode rejection for voltage inputs. However, the circuit performance is more than adequate with the 250 ohm resistor in series with the return connection.

The current sensing, voltage sensing, and output FET control signals are all referenced to the same terminal of the power supply voltage. This permits the use of less expensive and simpler single-ended (unbalanced) circuits in place of balanced differential circuits. It is possible to arrange the circuit this way because of the isolated power source.

The signal ranges for current sensing, voltage sensing and output current control permit all of the circuitry to operate on a supply voltage of 12 volts or less, even though the field devices sometimes require higher voltages. Although the voltage at terminal 28c can be expected to vary at times throughout the range of 0.0 volts to 24.0 volts, the signals at 28 b, at point 84, and at the output of S1 to the gate 100 of output FET 74 all remain at lower voltages, usually 8 volts or less, with most of the excess I/O terminal voltage being dropped across the output FET 74. This lower supply voltage requirement permits incorporation of almost all of the circuitry into an inexpensive CMOS integrated circuit.

The 1.5 volt offset shown at 280, which is derived from the power supply and switched into the output FET control loop involving amplifiers 94 and 98, approximates the turn-on voltage required by the output FET. Including this offset voltage when the output control loop is not being closed through the output FET minimizes the disturbance when the output control loop is first switched into a mode which does make amplifiers 94 and 98 control the output FET. This is important when capacitor 102 is used to make amplifier 98 act like an integrator, slowing the response of the output control loop.

Another embodiment preferred for certain purposes is shown in Figure 8. It offers only some of the features of the version described above, but at reduced cost. This embodiment has no voltage input terminal, and has no isolation between the channels. It also has no provision for counting pulses or measuring pulse frequency. The circuit does provide isolation between all the channels, as a group, and ground, and it does provide basic "2-wire" current input and current output, as well as voltage output when used with an external resistor. The circuit is simple enough that no custom IC is necessary.

In this circuit, the nomenclature of "PWR" and "COM" for the terminals is inappropriate, because the terminals formerly called "PWR" terminals (28a) are all connected together (suggesting a "common" I/O connection terminal). Also, the terminals formerly called "COM" (28c) are separate from each other, and provide the signal output or signal input connection for each signal. This change is necessary because, without channel-to-channel isolation, some point in each channel must be connected together. The I/O terminal which connects to the power supply is the logical point to connect the channels together.

Examining one of the I/O channels (e.g. channel 1 in Fig. 8), the circuit of current-sensing resistor 277, output transistor 274, terminals 28c and 28a, and power source (-24 volts) are the same as with the previously shown embodiment, except that the voltage polarities are changed. This polarity change is necessary to conform with the industry convention of having a negative polarity on the "common" terminal, in this case 28a. The negative supply voltage is applied to terminal 28a, and the output transistor 274, connected between the current sense resistor 276 and terminal 28c, is a P-channel rather than an N-channel device. The per-channel control circuitry is simpler, requiring only one op amp 286 per channel. A single DAC 282 is shared among all channels by means of a demultiplexing sample-and-hold circuit 285, which periodically reads the DAC and, when the correct value for a given channel is present, holds that value on the appropriate line until a new value is available. A single ADC 288 is shared among all channels by an analog multiplexer 290, which feeds a given channel's signal voltage to the ADC periodically, at the correct times for the ADC to convert the value and supply the converted digital code to the microcomputer 300.

In a channel used for current output, the value sent to the DAC 282, and held in the demultiplexing sample-and-hold 285, corresponds with the desired current. The op amp in each channel regulates the resistance of the output transistor so that the sensed current signal from resistor 277 balances out the signal from the sample-and-hold. The two signals must be of equal value with opposite polarity. The actual output current can be monitored for diagnostic purposes by the signal from sense resistor 277, which is fed through the multiplexer 290 to the ADC 288, and then, as a series of pulses, to the microcomputer 300.

In a channel used for current input, the value sent to the DAC 282 and held in the demultiplexing sample-and-hold 285 corresponds with the maximum allowed short-circuit current for the I/O circuit. In this case, the external device which is regulating the current produces a current value less than the short-circuit value. Therefore, the op amp circuit 286 saturates, turning on the output transistor 274 hard, so that it has a very low resistance. The value of the current input signal is represented by the voltage developed across the sense resistor 277. This voltage signal is fed through the multiplexer 290 to the ADC 288, and then to the microcomputer 300 as a series of pulses.

For voltage-output operation, an external resistor is attached between terminals 28a and 28c. The circuit then operates as for current output. The output current through the external resistor produces the desired output voltage signal.

Signals passing from the microcomputer 300 to the isolated group of channels are optically isolated by isolator 304. The signal from the ADC,namely "DATA IN rd" is passed to the microcomputer by way of optical isolator 305. The lines from the isolator carry serial data from the ADC (labeled "data in rd"), serial data to the DAC and channel select circuit 320 (labeled "data out td"), a data clock for timing serial data bits (labeled "data clk"), a continuous clock for the ADC (labeled "adc clock"), and select lines for the ADC 288 ("adc sel"), the DAC ("dac sel"), and the channel select circuit ("decoder sel") a total of seven signals. In addition, there is an eighth line used as a secondary method of disabling the off-line channels in redundant system.

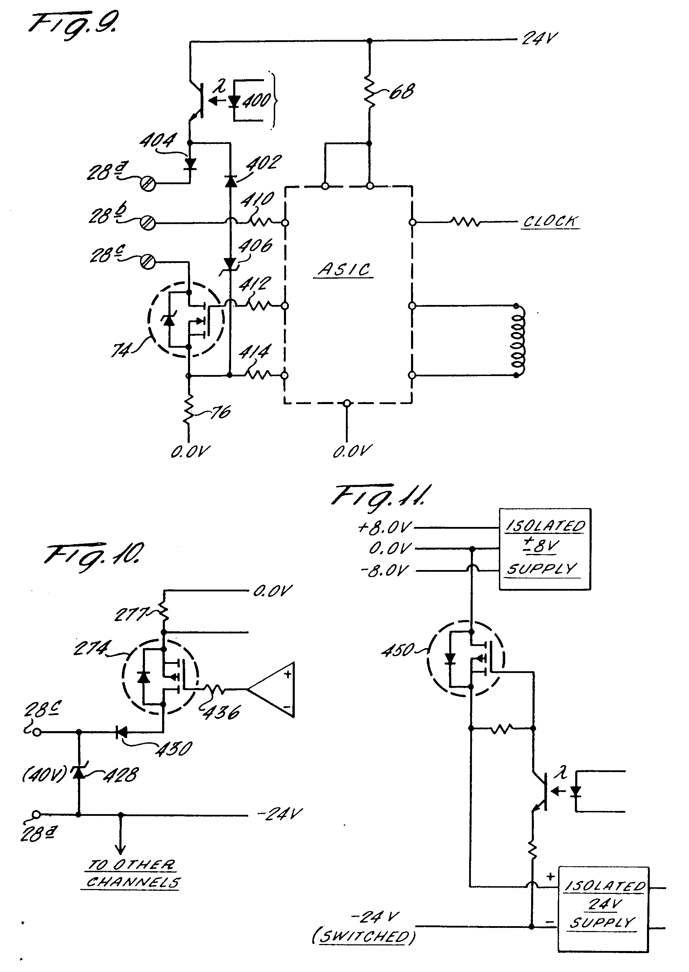

While not shown in the Figures discussed in detail above, various subsidiary circuit elements may be used in certain preferred embodiments for increased safety, control or monitoring. Typical arrangements employing such devices are shown in Figs. 9-11. These figures show additional parts included in the preferred embodiments to provide a secondary means of disabling channels for redundant systems, to protect the circuit from voltage spikes caused by interrupting the current through inductive loads or by coupling of transient disturbances from other wiring into the I/O circuit, and to minimize circuit damage resulting from miswiring the terminals to some external power sources. Other similar protective circuits can be used, as well.

In the preferred embodiment first described above, with channel-to-channel isolation and voltage inputs, an opto-coupler 400 (Fig. 9) is preferably added to each I/O channel in series with the supply voltage as a means of interrupting the current to terminal 28a. This provides a second way to disable the channel if the output transistor becomes shorted in redundant systems, and it becomes necessary to disable the channel. Diodes 402, 404 and 406, may be used to provide a path for current flow from an inductance being switched off quickly. Diode 404 and resistors 410, 412 and 414 will minimize damage from miswiring the terminals to some external power sources. Resistor 412 can also reduce the amount of high-frequency noise reaching the field wiring terminals.

In the alternative preferred embodiment of Fig. 8, which does not provide channel-to-channel isolation and does not handle voltage inputs, diode 428 (see Fig. 10) is preferably used to provide a path for current from an inductance being switched off quickly; diode 430 protects against miswiring to some external power sources, and minimizes the chance that one module of a redundant pair will affect operation of its mate. Resistor 436 reduces the amount of high frequency noise reaching the field wiring terminals, and minimizes damage from miswiring the terminals to some external power sources. Power transistor 450 (Fig. 11) provides a second way to disable a channel in Fig. 8 if any of the output transistors becomes conductive due to various possible circuit failures, by opening the series connection of the isolated 24 volt supply to the load resistor 277 (Fig. 8).

It will be understood that the computer apparatus for controlling the modes of the I/O circuit and for computing output values need not be lumped in one or more controller computers, but may be distributed in different locations as is convenient for the particular application.

While the invention has been described with particular reference to specific embodiments in the interest of complete definiteness, it will be understood that it may be embodied in a variety of forms diverse from those specifically shown and described, without departing from the spirit and scope of the invention.

## Claims

1. An I/O circuit, comprising, a first (28a) and a second (28c) I/O terminal, a source (56, 62) of supply voltage having two output terminals, and means connecting one terminal of said supply voltage source to said first (28a) I/O terminal, characterised by an electrically-controllable variable resistance device (74) having first and second terminals, and a third terminal (100) responsive to an electrical variable to vary the resistance presented by said device (74) between said first and second terminals of the device (74), said first terminal of the device (74) being connected to said second I/O terminal (28c), electrical load means (76) connected between said second terminal of said variable resistance device (74) and the other terminal of said supply voltage source (56, 62), and means (S.1) for applying differently varying electrical variables to said third terminal (100) to operate it in corresponding different modes.

2. The I/O circuit of claim 1, characterised by a third I/O terminal (28b) and means for sensing the voltage between said third I/O terminal (28b) and said second terminal (28c) of said supply voltage source.

3. An I/O system for use in a process control system of the type which includes control computer means (10), a plurality of remote sensor apparatuses (11, 17, 21) for producing electrical signals corresponding to the values of process variables, a plurality of remote controlled devices (15, 19), a plurality of sets of terminals (28) each set connectable either to one of said remote sensor apparatuses or to one of said remote controlled devices, and a module (30) containing a plurality of I/O circuits (80) each connectable between said control computer means (10) and one of said sets of terminals (28) for interfacing said control computer means (10) with said sensor apparatuses (11, 17, 21) and said remote controlled devices (15, 19), each of said I/O circuits (80) being electrically changeable to operate in any of a plurality of different modes, in a first of which modes it is responsive to first signals supplied thereto from one of said sensor apparatuses (11, 17, 21) by way of an associated pair (28a, 28c) of said terminals to deliver corresponding signals to said control computer means (10), and in a second of which modes it is operative in response to signals from said control computer means (10) to supply signals to said associated pair of terminals (28a, 28c) for delivery to said controlled devices (15, 19), characterised in that each of said I/O circuits comprises a source (56, 62) of supply voltage, one output terminal of which is connected to one of the terminals (28a) of said associated pair of I/O terminals, and an electrically variable resistance device (74) and load means (76) connected in series with each other between the other output terminal of said supply voltage source and the other (28c) of said associated pair of I/O terminals.

4. The system as claimed in claim 3, characterised in that each of said I/O circuits (80) comprises means connected across said load means (76) to sense the voltage across it, and means connected to the control element (100) of said electrically variable resistance device (74) to control the resistance thereof for rendering it highly conductive when a current input signal from one of said sensor apparatuses (11, 17, 21) is to be sensed and to vary its resistance when current or voltage output signals to one of said remote controlled devices (15, 19) is to be produced.

5. The system as claimed in claim 3 or claim 4, characterised in that said module contains a programmed microcomputer (52) for placing each of said I/O circuits in the selected mode of operation thereof.

6. The system as claimed in any one of claims 3 to 5, characterised in that each of said sets of terminals comprises a third terminal (28b) in addition to said pair of terminals (28a, 28c), and said system comprises voltage-sensing means (120, 122) responsive to voltages applied between said third terminal (28b) and that one (28c) of said pair of terminals which is connected to said series combination of said variable resistance device (74) and said load means (76).

7. The system as claimed in any one of claims 3 to 6, characterised in that said I/O circuits are galvanically isolated from each other.

8. A signal processing system comprising: a plurality of sensors (11, 17, 21) each for sensing a process variable to produce electrical signals corresponding to the value of said process variable, a plurality of transmitters (12, 16, 20) each having a pair of output terminals and each responsive to said electrical signals for developing, at said pair of transmitter output terminals (28a, 28c), transmitter signals corresponding to said electrical signals, a plurality of controlled devices (15, 19) each responsive to control signals supplied to the input terminals thereof to vary a process variable, control computer means (10), an I/O system comprising at least one I/O module (30) connected to, and providing an interface between, said control computer means (10) and said plurality of transmitters (12, 16, 20) and controlled devices (15, 19), each said I/O module (30) comprising a plurality of I/O circuits (80) each capable of operating in a plurality of modes, in one of which modes it processes said transmitter signals supplied thereto and in another of which modes it processes signals for application to said controlled devices, and mode-control means (52) for switching said I/O circuit (80) between said modes in response to control signals from said control computer means, characterised in that each I/O circuit comprises: a first I/O terminal (28a) and a second I/O terminal (28c) connectable either to said output terminals of one of said transmitters (12, 16, 20) or to said input terminals of one of said controlled devices (15, 19), a source (56, 62) of supply voltage, means connecting one terminal of said source of supply voltage to said first terminal (28a) of said each I/O circuit, an electrically variable resistance device (74) and a fixed resistance device (76) connected in series between said second terminal (28c) of said each I/O circuit and the other terminal of said source (56, 62) of supply voltage, means (80) for operating said variable resistance device (74) in a high-conduction, low-resistance state when said I/O circuit is operating in said one mode thereof, means (85) for converting the voltage developed across said fixed resistance device (76) to a digital signal and for transmitting (S.4, 78) said digital signal to said control computer means (52) when said I/O circuit is operating in said one mode, and means (92) for converting signals from said control computer means (52) to analog form for application to the resistance-control element (100) of said variable resistance device (74) to provide output signals from said first (28a) and second (28c) I/O circuit terminals when said each I/O circuit is in said other mode thereof.

9. A system according to claim 8, characterised by a third I/O terminal (28b), and means (120) for sensing voltage developed between said third I/O terminal (28b) and that one (28c) of said first and second terminals which is connected to said series combination of said variable resistance device (74) and said load means (76).

10. A circuit as claimed in claim 1 or claim 2, or a system as claimed in any one of claims 3 to 9, characterised in that the electrically-controllable resistance device (74) is a transistor (in particular an FET) and said load means (76) is a resistor.
